# EUROPÄISCHE PATENTSCHRIFT

(11) **EP 0 581 824 B1**
(45) Veröffentlichungstag und Bekanntmachung des Hinweises auf die Patenterteilung: **31.07.1996**
(21) Anmeldenummer: 92909103.1
(22) Anmeldetag: 23.04.1992
(51) Int. Cl.: B09B 3/00, B03B 9/06

(54) **VERFAHREN ZUR AUFBEREITUNG VON RÜCKSTANDSHALTIGEN EMBALLAGEN UNTER GEWINNUNG DER WERTSTOFFE**
PROCESS FOR TREATING PACKAGING CONTAINING RESIDUES TO RECOVER THE VALUABLE SUBSTANCES
PROCEDE DE RETRAITEMENT DES EMBALLAGES LAISSANT DES RESIDUS AVEC EXTRACTION DES MATERIAUX DE VALEUR

(30) Priorität: 24.04.1991 DE 4113397
(43) Veröffentlichungstag der Anmeldung: 09.02.1994
(73) Patentinhaber: RATHOR AG, CH-9050 Appenzell (CH)
(72) Erfinder: PAULS, Mathias, CH-9050 Appenzell (CH); KELLNER, Torsten, CH-9050 Appenzell (CH)
(74) Vertreter: Thiel, Christian, Dr. Dipl.-Chem.
(86) Internationale Anmeldenummer: EP9200893
(87) Internationale Veröffentlichungsnummer: WO9219393

(56) Entgegenhaltungen:
- EP-A- 0 208 660
- EP-A- 0 359 106
- EP-A- 0 422 501
- DE-A- 3 714 312
- DE-A- 3 817 273
- DE-U- 8 805 008
- US-A- 3 734 776
- US-A- 4 809 915
- US-A- 4 844 106

## Beschreibung

Die Erfindung betrifft ein Verfahren zur Aufbereitung von gebrauchten oder schadhaften rückstandshaltigen Emballagen unter Gewinnung der Wertstoffe, insbesondere auch von Aerosoldosen, beispielsweise solchen für die Ausbringung von Polyurethanschaum, sowie eine Anlage zur Durchführung des Verfahrens.

Rückstandshaltige Emballagen, wie sie beispielsweise in Form von ganz oder teilweise entleerten Aerosoldosen, Behältern für chemische oder technische Flüssigkeiten und Produkte der Mineralölindustrie, aber auch in Form von Filtern für verschiedene Zwecke, beispielsweise Ölfiltern von Kraftfahrzeugen, in großen Mengen anfallen, werden zunehmend zu einem Entsorgungsproblem. Eine Ablagerung auf Deponien verbietet sich aus Gründen des Umweltschutzes, da die darin enthaltenen Rückstände in die Atmosphäre, ins Erdreich oder ins Grundwasser gelangen können und dort zu erheblichen Schäden führen können. Entsprechendes gilt für die Verbrennung, die insbesondere bei chemisch- technischen Produkten häufig nur unvollständig ist und große Mengen Schadstoffe erzeugt, die, wenn überhaupt, nur durch aufwendige Maßnahmen gebunden werden können. Insoweit führt eine Verbrennung zwar zu einer starken Verminderung des Abfallvolumens, nicht dagegen zu einer Lösung der Umweltbeeinträchtigung.

Im folgenden wird auf dieses Problem anhand der Entsorgung von prepolymerhaltigen Aerosoldosen für die Erzeugung von Polyurethanschäumen näher eingegangen.

Polyurethanschäume haben auf vielen Gebieten weit verbreitete Anwendung gefunden. Insbesondere im Bauwesen werden sie vielfach zum Abdichten und Isolieren eingesetzt, ebenso auf anderen technischen Gebieten. In der Regel werden Polyurethanschäume aus Aerosoldosen ausgebracht, die ein Polyurethanprepolymer zusammen mit dem benötigten Treibmittel und gegebenenfalls ebenfalls benötigten Additiven enthalten. Diese Aerosoldosen stehen unter Druck und können und dürfen nach Gebrauch nicht wiederverwandt werden und müssen deshalb beseitigt werden. Andererseits stellen sie Problemabfall dar, der einer normalen Entsorgung nicht zugänglich ist. Zudem enthalten insbesondere Aerosoldosen aus älterer Produktion regelmäßig fluorierte Chlorkohlenwasserstoffe, die als die atmosphärische Ozonschicht schädigend angesehen werden und deshalb nicht in die Atmosphäre gelangen sollen.

Im Rahmen der Bemühungen zur Eindämmung des Haus- und Gewerbeabfalls werden zunehmend Maßnahmen diskutiert und auch verordnet, die die Hersteller Zwingen, die Verpackung ihrer Produkte nach Gebrauch zurückzunehmen und selbst für die Wiederverwendung bzw. Beseitigung zu sorgen. Durch solche Maßnahmen ist es erforderlich geworden, nach Wegen für eine wirtschaftliche Behandlung solchen Abfalls zu suchen.

Bei der Behandlung von zurückgenommenen Aerosoldosen für die Polyurethanschaumherstellung ergeben sich eine Reihe von Problemen, die bislang einer wirtschaftlichen Wiederaufbereitung und Rückgewinnung entgegenstanden. Beispielsweise steht ein Teil der zurückgenommenen Dosen wegen noch darin verbliebenem Treibgas unter nicht unerheblichem Druck, der sowohl die Öffnung als auch die Verbrennung zu einem Problem macht. Weiterhin weisen die Dosen einen unterschiedlichen Füllungszustand auf, der von überalterten Dosen mit praktisch vollständiger Prepolymerfüllung, die aufgrund eines blockierten Ventils nicht mehr ausgebracht werden kann, bis hin zu praktisch vollständig entleerten Dosen mit an den Randungen anhaftendem Rest von Prepolymer in unvernetztem bis vernetztem Zustand reicht. Diese unterschiedlichen Zustände standen bislang einer einheitlichen Behandlung und Rückgewinnung der Reste im Wege.

DE-A1-3 817 273 beschreibt ein Verfahren zum Zerkleinern von unter Druck stehenden Behältern, wie z. B. Spraydosen, bei dem die Zerkleinerung unter einem Überdruck von Inertgas erfolgt, die zerkleinerten Teile der Behälter innerhalb des Überdruckbereichs von den Inhaltsstoffen getrennt werden und die Inhaltsstoffe innerhalb des Überdruckbereichs aufgefangen werden. In der zur Durchführung des Verfahrens vorgesehenen Vorrichtung können oberhalb des Schneidwerks Sprühdüsen für ein chemisches Mittel zum Beeinflussen der Behälterinhaltsstoffe angeordnet sein. Die Art des chemischen Mittels ist nicht angegeben, ebenso fehlt ein Hinweis auf die Verwendung von Lösungsmitteln in diesem Verfahren.

DE-U-8 805 008 beschreibt eine Vorrichtung zum Zerkleinern von Behältern, insbesondere Metalldosen, welche Treibmittel und/oder Restprodukte enthalten, mit motorgetriebenen Zerkleinerungswerkzeugen im und einer luftdicht verschließbaren Schleuse über dem Arbeitsraum, wobei der Arbeitsraum luftdicht abgeschlossen ist und eine Einlaßöffnung für Schutzgas aufweist, eine Auffangvorrichtung für die Bestandteile der zerkleinerten Behälter, welche sich luftdicht an den Arbeitsraum anschließt, sowie eine Abgasleitung, die mit dem Arbeitsraum in Verbindung steht. Die Verwendung von Lösungsmitteln ist nicht vorgesehen, ebensowenig das Besprühen der zu zerkleinernden Behälter mit Lösungsmitteln.

Der Erfindung liegt die Aufgabe zugrunde, ein Verfahren bereitzustellen, mit dem Emballagen, beispielsweise Behälter, die Polyurethanprepolymer insbesondere für die Schaumherstellung, aber auch für Klebezwecke enthalten, aufbereitet und die darin enthaltenen Wertstoffe gewonnen werden können, ohne daß gesundheits- und umweltschädliche Inhaltsstoffe unkontrolliert freigesetzt werden.

Erfindungsgemäß wird diese Aufgabe mit einem Verfahren der eingangs genannten Art erreicht, das die folgenden, parallel durchgeführten Schritte umfaßt: Einbringen der Emballagen in einen Arbeitsbehälter und Extraktion der Rückstände mit einem Lösungsmittel Transferieren der rückstandshaltigen Lösung aus dem Arbeitsbehälter in einen Sumpfbehälter` Konzentrieren der rückstandshaltigen Lösung im Sumpfbehälter unter Verdampfen des Lösungsmittels, Kondensieren des verdampften Lösungsmittels, Rückführen von Lösungsmittel in den Arbeitsbehälter sowie nach hinreichender Anreicherung Gewinnen der Rückstände in konzentrierter Form aus dem Sumpfbehälter.

Vorzugsweise werden die aufzubereitenden Emballagen unter gleichzeitiger Öffnung in den Arbeitsbehälter eingeschleust. Dies kann mit einer herkömmlichen Schleuse erfolgen, die gewährleistet, daß der Arbeitsbehälter gegen die Umgebung abgeschlossen bleibt.

Soweit die Emballagen noch nicht geöffnet sind, werden sie zweckmäßigerweise bei der Einschleusung geöffnet. Dies geht vorzugsweise mit einer gleichzeitigen Zerkleinerung einher, beispielsweise in einer für solche Zwecke konstruierten Zerkleinerungsanlage. Nachstehend wird diese Zerkleinerung mit Schredden bezeichnet.

Besonders vorteilhaft erfolgt das Öffnen bzw. Schredden der Emballagen unter Besprühen mit Lösungsmittel. Hierdurch wird zum einen das Aufschäumen verhindert und zum anderen etwa eingetragenes Wasser vom Lösungsmittel aufgenommen und verteilt, bevor es mit den Inhaltsstoffen unkontrollierte Reaktionen eingehen kann, was insbesondere bei feuchtigkeitsempfindlichen Materialien, insbesondere feuchtigkeitsvernetzenden Polyurethanprepolymeren, wichtig ist.

Die geschreddeten Emballagen werden anschließend im Arbeitsraum von einer Fördereinrichtung aufgenommen, vorzugsweise von einer Förderschnecke, die geeignet ist, Feststoffe von Flüssigkeiten und Lösungen zu separieren. Sofern es sich bei den Emballagen um ferromagnetische Materialien handelt, kommt auch eine magnetische Abförderung infrage. Kombinationen beider Förderverfahren können ebenfalls zweckmäßig sein, insbesondere dann, wenn Emballagen aus Weißblech mit Kunststoffteilen versehen sind, wie es vielfach in Aerosoldosen der Fall ist.

Die Extraktion der Rückstände in den geöffneten bzw. zerkleinerten Emballagen erfolgt im Arbeitsbehälter mit einem auf die jeweiligen Rückstände abgestimmten Lösungsmittel. Geeignete Lösungsmittel sind in jedem Fall solche, wie sie bei der Herstellung der ursprünglichen Emballageninhalte verwandt wurden und/oder in den Emballagen selbst noch enthalten sind.

Die Extraktion kann zum einen dadurch erfolgen, daß die geöffneten und/oder zerkleinerten Emballagen in den lösungsmittelgefüllten Arbeitsbehälter fallen und dort für eine gewisse Zeit verbleiben, bevor sie abgefördert werden. Parallel dazu oder alternativ können die Emballagen bereits während der Zerkleinerung und/oder während des Fördervorgangs mit frischem Lösungsmittel besprüht und gewaschen werden. Zweckmäßig ist es, die Emballagen in allen drei Stufen mit dem Lösungsmittel in Berührung zu bringen, also sowohl während der Zerkleinerung und der Abförderung zu besprühen als auch in Kontakt mit dem im Arbeitsbehälter befindlichen Losungsmittel zu bringen, beispielsweise im Auffangtrichter einer Förderschnecke.

Im Anschluß an die Abförderung werden die festen Rückstände dann, in beliebiger Reihenfolge, getrocknet und ausgeschleust sowie anschließend sortiert und der Wiederverwertung zugeführt.

Als Lösungsmittel besonders geeignet sind übliche Ester, Ketone, aliphatische und aromatische Kohlenwasserstoffe und deren Derivate, insbesondere solche mit einem Siedepunkt bis zu etwa 200°C. Werden Behälter mit Polyurethanprepolymeren aufbereitet, kommen als Lösungsmittel insbesondere Aceton und Toluol infrage.

Bei der Aufbereitung von rückstandshaltigen Sprüh-, Druck- und Aerosoldosen können größere Mengen an Treibgasen anfallen, deren Entweichen in die Atmosphäre unerwünscht ist. In solchem Fall ist es zweckmäßig, das freigesetzte Treibmittel aufzufangen und mittels geeigneter Maßnahmen zu kondensieren. Eine solche Kondensation kann zum einen durch eine Kompression unter Verflüssigung erfolgen, zum anderen aber auch durch Auskondensieren bei tiefen Temperaturen. Diese Maßnahmen sind insbesondere bei verflüssigbaren Treibgasen angebracht, etwa niedrigsiedenden Fluorchlorkohlenwasserstoffen oder auch brennbaren Kohlenwasserstoffen, wie Propan oder Butan.

Erfindungsgemäß wird die im Arbeitsbehälter erhaltene rückstandshaltige Lösung in einen Sumpfbehälter transferiert, beispielsweise durch Umpumpen, in dem die Lösung weiter konzentriert wird. Dazu wird die Lösung auf eine erhöhte Temperatur gebracht und das Lösungsmittel vom Sumpf abdestilliert, wozu es zweckmäßig sein kann, zur Verminderung der Siedetemperatur und zur Vermeidung von Versetzungen in den Rückständen bei vermindertem Druck zu arbeiten. Die abdestillierten Lösungsmittel werden kondensiert und, nach gegebenenfalls notwendiger destillativer Reinigung, in das Verfahren zurückgeführt. Die Rückstände im Sumpf des Sumpfbehälters werden nach genügender Konzentration abgezogen und der weiteren Verwertung zugeführt.

Für den Fall, daß das erfindungsgemäße Verfahren auf die Aufbereitung von Aerosoldosen mit Polyurethanprepolymeren angewandt wird, ist es zweckmäßig, zur Erhöhung der Fließfähigkeit des im Sumpfbehälter sich sammelnden Prepolymers ein übliches Verdünnungsmittel zuzusetzen. Ein solches Verdünnungsmittel sollte einen höheren Siedepunkt als das jeweils verwandte Lösungsmittel haben. Besonders geeignet für diese Zwecke ist Triethylphosphat oder frischer Rohstoff, ähnlich den Rohstoffen, die ursprünglich in die Emballagen eingefüllt werden.

Zweckmäßigerweise wird das erfindungsgemäße Verfahren unter Schutzgas, vorzugsweise Stickstoff oder Argon, durchgeführt. Andere mögliche Schutzgase sind CO₂, CO₂-haltige Verbrennungsgase und dergleichen, wobei es vor allem auf die Verdrängung des Sauerstoffs im Bereich des Verfahrens ankommt, um explosionsfähige Mischungen zu vermeiden. Im Falle der Verwendung von Reinstickstoff oder -argon ist es zweckmäßig, das Schutzgas im Kreis zu führen, wobei in geeigneten Kondensationsstufen vom Schutzgas mitgeführte Gase, etwa Treibmittel und verdampfte Lösungsmittel, auskondensiert werden. Aus Aerosoldosen freigesetze nicht brennbare Treibgase können ebenfalls den Schutzgaseffekt ausüben.

Ein besonderer Vorteil des erfindungsgemäßen Verfahrens liegt darin, daß es kontinuierlich durchgeführt und mit nur geringen Modifikationen auf eine Vielzahl von marktüblichen Emballagen angewandt werden kann. Einige der Einsatzgebiete wurden eingangs erwähnt, ohne daß eine Beschränkung der Erfindung auf diese Einsatzzwecke beabsichtigt wäre.

Mit dem erfindungsgemäßen Verfahren ist es beispielsweise möglich, Polyurethanprepolymer enthaltende Rückstände aus Aerosoldosen und anderen Behältern aufzubereiten und in einer verwertbaren Form zurückzugewinnen und gleichzeitig das Rohmaterial der Behälter in relativ reiner Form, die sich für die Wiederverwendung oder Deponierung eignet, zu gewinnen. Das sich bei dem Verfahren im Sumpfbehälter in konzentrierter Form anreichernde Prepolymer kann für eine Vielzahl von Zwecken eingesetzt werden, beispielsweise gelöst in Toluol oder einem anderen Lösungsmittel als Klebstoff, als Bindemittel in Verbundwerkstoffen oder als Haftungsvermittler bei der Herstellung von Formteilen aus Recyclingprodukten, wie etwa Kunststoffplatten aus granulierten Altreifen.

Bei der Durchführung des Verfahrens werden zunächst die in den Behältern bzw. Aerosoldosen enthaltenen Rückstände in den Arbeitsbehälter gegeben und in dem dort vorhandenen Lösungsmittel in Lösung gebracht. Durch das Einspeisen der Rückstände in den Arbeitsbehälter und die Rückführung von verdampftem Lösungsmittel steigt das darin enthaltene Volumen über ein Arbeitsvolumen an, bei dem Lösung aus dem Arbeitsbehälter in den Sumpfbehälter transferiert wird. Insgesamt befindet sich im Arbeitsbehälter ein konstantes Volumen aus Lösungsmittel und gelöstem Rückstand.

Der Sumpfbehälter wird über ein geeignetes Medium so weit erhitzt, daß die darin enthaltene Lösung siedet und kontinuierlich Lösungsmittel abdestilliert. Dieses Lösungsmittel wird mit Hilfe eines Kühlmediums kondensiert und direkt oder indirekt in den Arbeitsbehälter zurückgeführt, so daß dort ständig frisches Lösungsmittel zum Lösen der eingebrachten Rückstände zur Verfügung steht. Auf diese Weise werden die in den Arbeitsbehälter eingebrachten Rückstände permanent mit Lösungsmittel extrahiert. Die Extrakte reichern sich im Sumpfbehälter an, da dort das Lösungsmittel permanent abgetrieben wird und werden von dort nach hinreichender Anreicherung gewonnen. Im Arbeitsbehälter verbliebene unlösliche Rückstände werden von dort von Zeit zu Zeit abgezogen.

Besonders vorteilhaft kann das erfindungsgemäße Verfahren auf die Rückgewinnung von Prepolymer aus Aerosoldosen für die Herstellung von Polyurethanschaum angewandt werden. Die Aerosoldose kann dabei über einen Adapter in den Arbeitsbehälter entleert werden, vorteilhaft ist aber die Öffnung und Extraktion im Arbeitsbehälter selbst. Vorzugsweise wird die Aerosoldose im Arbeitsbehälter in einer dafür geeigneten Vorrichtung zerkleinert, etwa einem Schredder. Die Rückstände der Zerkleinerung können, da Aerosoldosen in der Regel aus Weißblech bestehen, mit Hilfe eines Magneten aus dem Arbeitsbehälter entfernt werden, aber auch mittels Förderschnecke, wie vorstehend erwähnt.

Gemäß einer bevorzugten Ausführungsform erfolgt der Lösungstransfer vom Arbeitsbehälter in den Sumpfbehälter mittels Überlauf. Dazu befindet sich der Lösungsmittelspiegel im Arbeitsbehälter unterhalb der Öffnung einer im wesentlichen leicht nach unten geneigt verlaufenden Verbindung zum Sumpfbehälter, so daß bei Zufuhr von Extraktionsgut in den Arbeitsbehälter die Lösung durch die Verbindung in den Sumpfbehälter abläuft. Im technischen Maßstab ist ein Transfer mittels Pumpe und Leitung zweckmäßig.

Gemäß einer weiteren bevorzugten Ausführungsform wird das aus dem Sumpfbehälter abdestillierte Lösungsmittel direkt oberhalb des Arbeitsbehälters kondensiert, so daß das Kondensat in den Arbeitsbehälter zurücktropft oder abläuft. Hierdurch wird im Arbeitsbehälter ständig frisches Lösungsmittel bereitgestellt, das die zur Aufnahme der Rückstände nötige Lösungskapazität besitzt. Die ständige Lösungsmittelzufuhr gewährleistet zudem, daß die Prepolymerkonzentration im Arbeitsbehälter nicht zu hoch wird.

Wird das aus dem Sumpfbehälter abdestillierte Lösungsmittel direkt oberhalb des Arbeitsbehältes kondensiert, wird vorzugsweise der Schredderrückstand durch den Strom des ablaufenden bzw. abtropfenden Lösungsmittels abgeführt. Hierdurch wird erreicht, daß Prepolymerrückstände bzw. anhaftende Lösung abgewaschen werden und eine optimale Reinigung erzielt wird.

Als Lösungsmittel für die Extraktion kommen insbesondere Ester, Ketone, aliphatische oder aromatische Kohlenwasserstoffe oder deren Derivate mit einem Siedepunkt bis etwa 200° C infrage. Besonders geeignet sind die Alkylester von Monocarbonsäuren und Ketone, jeweils mit bis zu 8 Kohlenstoffatomen, sowie Alkylbenzole mit bis zu 10 Kohlenstoffatomen. Besonders bevorzugt sind Aceton, Butanon, Toluol und Xylole. Soll das extrahierte Prepolymer anschließend für Klebstoffe verwandt werden, empfiehlt sich die Anwendung von Toluol, da Klebstoffe auf Polyurethanbasis häufig in Toluollösung angewandt werden. Zudem haben Lösungen von Polyurethanprepolymeren in Toluol eine vergleichsweise niedrige Viskosität.

In den Sumpfkolben kann ein Verdünnungsmittel gegeben werden, das die Fließfähigkeit des transferierten und daran angereicherten Prepolymers verbessert bzw. gewährleistet. Wird das Verdünnungsmittel bereits zu Beginn der Extraktion zugesetzt, muß es einen höheren Siedepunkt als das Lösungsmittel haben, damit es sich im Laufe der Extraktion nicht abreichert. Üblicherweise verwandte Verdünnungsmittel für Prepolymere sind Trialkylphosphate, insbesondere Triethylphosphat, oder andere dem Ausgangsstoff entsprechende Rohstoffe.

Gemäß einer weiteren bevorzugten Ausführungsform des erfindungsgemäßen Verfahrens wird das in den Aerosoldosen noch enthaltene Treibmittel - in der Regel fluorierte Chlorkohlenwasserstoffe, teilhalogenierte Kohlenwasserstoffe, Dimethylether, Propan, Butan, etc. - ebenfalls aufgefangen und gewonnen. Hierzu kann der aus dem Arbeitsbehälter gelangende Gasstrom komprimiert werden, so daß die darin enthaltenen Treibgase verflüssigt werden. Alternativ können die Treibmittel durch Abkühlung kondensiert und in einer Kühlfalle aufgefangen werden.

Das erfindungsgemäße Verfahren eignet sich sowohl für die chargenweise als auch für die kontinuierliche Durchführung. Wegen der doch erheblichen Investitionskosten kosten empfiehlt sich für die Durchführung der kontinuierliche Betrieb.

Die Erfindung betrifft ferner eine Anlage gemäß Anspruch 21 zur Durchführung des erfindungsgemäßen Verfahrens. Eine solche Anlage umfaßt eine Eingangsschleuse, eine Vorrichtung zum Öffnen der eingeschleusten Emballagen, einen Auffangbehälter für die geöffneten Emballagen, wenigstens je einer Zuleitung für frisches Lösungsmittel und Schutzgas, einen Abzug für lösliche Emballagenrückstände enthaltendes Lösungsmittel, eine Fördereinrichtung für feste Emballagenrückstände sowie wenigstens eine auf die Vorrichtung zur Öffnung der Emballagen gerichtete Sprüheinrichtung zum Versprühen von Lösungsmittel. Angeschlossen sind ferner periphere Einrichtungen zur Gewinnung der festen und gelösten Emballagenmaterialien, zur Rückgewinnung des Lösungsmittels sowie Abscheider für aus den Emballagen gegebenenfalls freigesetzte Treibgase.

Die in der Anlage verwandte Vorrichtung zum Öffnen der eingeschleusten Emballagen besteht zweckmäßigerweise aus einem herkömmlichen Schredder mit zwei gegenläufig zueinander rotierenden, mit Schneidmesser versehenen Trommeln. Wesentlich ist, daß ein solcher Schredder oder jede andere zum Öffnen der Emballagen geeignete Vorrichtung während des Öffnungsvorgangs mit Lösungsmittel besprüht wird, um die beim Öffnen freigesetzten Rückstände unmittelbar in Lösungsmittel aufzunehmen. Auf diese Weise wird das Aufschäumen des Inhalts, wenn dieser Treibgase enthält, aber auch das Verkleben, vermieden. Zugleich wird durch das Besprühen an den Emballagen anhaftendes oder darin eingedrungenes Wasser verteilt, so daß es nicht zu einer unkontrollierten Reaktion dieses Wassers mit freigesetztem Emballageninhalt kommt. Dies ist besonders wichtig bei der Aufbereitung von Emballagen, die Polyurethanprepolymer enthalten, das in Gegenwart von Feuchtigkeit unkontrolliert vernetzt und zu einem Verkleben der Öffnungsvorrichtung führen kann. In Gegenwart ausreichender Mengen an Lösungsmittel kann die Konzentration an eingetragenem Wasser so weit vermindert werden, daß eine unkontrollierte Reaktion nicht mehr möglich ist. Dennoch ablaufende Vernetzungsreaktionen halten sich dann in tolerierbarem Rahmen.

Zweckmäßigerweise befindet sich wenigstens eine Sprühvorrichtung oberhalb der Öffnungsvorrichtung. Besonders vorteilhaft ist, wenn während des Öffnungsvorgangs die Öffnungsvorrichtung von oben und unten von jeweils wenigstens einer Sprühvorrichtung mit Lösungsmittel beschickt wird. Nach dem Öffnen gelangen die Emballagen zusammen mit dem darauf gesprühten Lösungsmittel in einen Auffang- und Extraktionsbehälter, aus dem die flüssigen bzw. gelösten Bestandteile über eine Leitung abgezogen werden und die festen Emballagenrückstände abgefördert werden.

Zweckmäßigerweise besteht die Fördereinrichtung aus einer Förderschnecke, die in den mit Lösungsmittel gefüllten unteren Teil des Auffangbehälters hineinragt und dort befindliche feste Bestandteile abfördert. Diese Förderschnecke wird vorzugsweise aus einer oder mehreren Sprühdüsen mit frischem Lösungsmittel besprüht, um an den abgeförderten Feststoffen anhaftende Lösung der Emballagenrückstände abzuwaschen. Das gewaschene Fördergut wird dann, zweckmäßigerweise nach Passieren einer Trocknungsanlage, über eine Ausgangsschleuse aus der Anlage ausgeschleust, um der weiteren Sortierung und Verwendung zugeführt zu werden.

Das in der erfindungsgemäßen Anlage verwandte Lösungsmittel wird zweckmäßigerweise im Kreislauf geführt. Hierzu ist es erforderlich, Lösung aus dem Extraktions- und Auffangbehälter kontinuierlich abzuziehen, durch Destillation von den gelösten Inhaltsstoffen zu befreien und nach der Kondensation über ein Leitungssystem in die Anlage zurückzuführen, der sie über die Sprühvorrichtungen und gegebenenfalls die Waschvorrichtung wieder zugeführt werden.

Für die Wiederaufbereitung von Emballagen, die brennbare und/oder reaktive Stoffe enthalten, wird die Anlage mit Schutzgas beschickt. Das Schutzgas wird über eine Leitung zweckmäßigerweise im Bereich der Öffnungsvorrichtung eingeführt und aus dem Extraktions- und Arbeitsbehälter und/oder der Trocknungsanlage wieder abgezogen. Zur Verminderung der Kosten kann das Schutzgas im Kreis geführt werden. Es ist zweckmäßig, im Schutzgaskreislauf Vorrichtungen zum Abscheiden von Aerosolen, Feuchtigkeit, mitgeführten Treibgasen und aufgenommenem Lösungsmittelanteil vorzusehen.

Wird die Anlage unter Schutzgas gefahren, ist es zweckmäßig, die Schleusen über separate Leitungen mit Schutzgas zu beschicken.

Die Erfindung wird durch die beiliegenden Abbildungen bevorzugter Ausführungsformen näher erläutert. Von diesen zeigen
- Fig. 1: eine Recycling-Apparatur im Labormaßstab zur Veranschaulichung,
- Fig. 2: eine technische Anlage in Form eines Verfahrensschemas und
- Fig. 3: eine Detaildarstellung der Anlage aus Fig. 2.

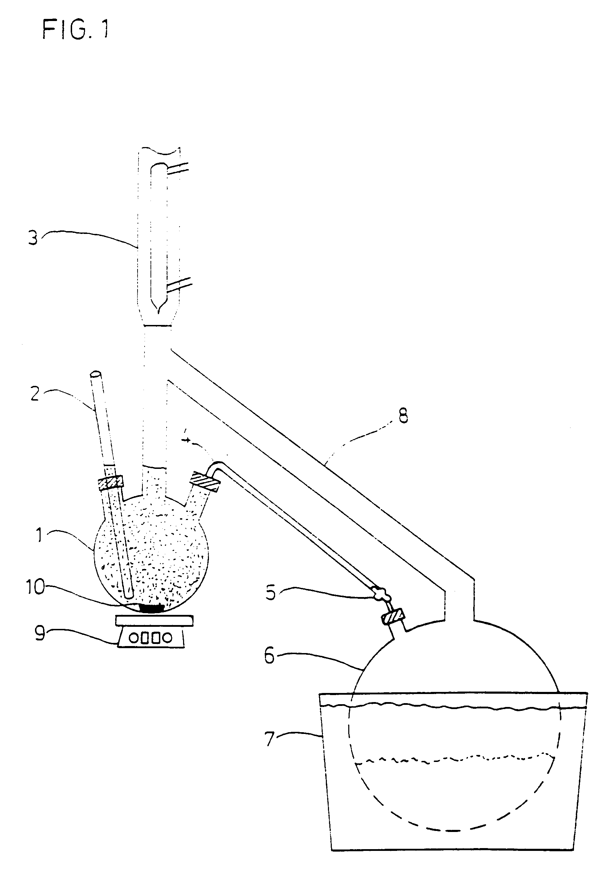

Fig. 1 zeigt eine Recycling-Apparatur für Polyurethanschaumbildner im Labormaßstab. In einem Dreihalskolben 1 mit einer Zuführung 2 und einem Überlauf 4, sowie einem in einem Rückflußkühler 3 endenden, aufsteigenden Rohr befindet sich das Extraktionslösungsmittel, dem über die Zuführung 2 und einen nicht gezeigten Adapter der Inhalt von nicht völlig entleerten Aerosoldosen für die PU-Schaumherstellung zugeführt wird. Ein Hohlmagnet 10, der über einen Magnetrührer 9 bewegt wird, sorgt für eine kontinuierliche Durchmischung.

Über den Überlauf 4 gelangt in dem Maße, in dem über die Zuführung 2 Material in den Dreihalskolben 1 gelangt, die Lösung aus dem Kolben 10 in den Sumpfkolben 6. Ein Absperrhahn 5 stellt sicher, daß die Zufuhr an Lösung unterbrochen werden kann. Der Sumpfkolben 6 wird über ein Heizbad 7 so weit beheizt, daß die darin enthaltene Lösung siedet und verdampftes Lösungsmittel durch ein zum Rückflußkühler 3 verlaufendes Rohr 8 abdestilliert. Das am Rückflußkühler 3 kondensierende extraktfreie Lösungsmittel tropft in den Arbeitskolben 1 zurück, nimmt dort erneut an der Extraktion teil und bewirkt gleichzeitig einen Lösungstransfer in den Sumpfkolben 6.

Die Durchführung des erfindungsgemäßen Verfahrens in der vorstehend beschriebenen Apparatur beginnt mit der Vorbereitung des Arbeitskolbens 1, in den beispielsweise Aceton als Lösungmittel eingebracht wird. Parallel dazu wird in den Sumpfkolben 6 eine geringe Menge Verdünnungsmittel, etwa Triethylphosphat, sowie weiteres Lösungsmittel gegeben, so daß das darin sich ansammelnde Prepolymer fließfähig bleibt.

Anschließend wird der Kreislauf angefahren. Der Sumpfkolben 6 wird auf ca. 90° C aufgeheizt und der Rückflußkühler und der Magnetrührer eingeschaltet. Nach etwa 15 Min. hat sich ein Gleichgewicht mit einem Systemkreislauf eingestellt, d.h. so viel Lösungsmittel, wie aus dem Sumpfkolben 6 über die Destillationsbrücke 8 in den Rückflußkühler 3 verdampft, kondensiert dort und tropft in den Arbeitskolben 1. Von diesem läuft das Lösungsmittel über den Überlauf 4 und den Absperrhahn 5 in den Sumpfkolben 6 zurück. Der Kreislauf ist geschlossen.

Sobald das Gleichgewicht eingestellt ist, wird über das Einleitungsrohr 2 und einen nicht gezeichneten Adapter PU-Schaum in den Arbeitskolben 1 eingeleitet. Dort löst sich der Schaum sofort auf, das Prepolymer geht in Lösung und das Treibgas entweicht durch den Kühler 3, an dessen oberen Ende es durch eine - nicht gezeigte - Kühlfalle abgeschieden wird. Das eingebrachte Volumen an Prepolymer fließt als verdünnte Lösung über den Überlauf 4 in den Sumpfkolben 6. Dort reichert sich das Prepolymer in dem Maße an, in dem über das Einleitungsrohr 2 PU-Schaum in den Arbeitskolben 1 eingespritzt und in verdünnter Lösung in den Sumpfkolben transferiert wird. Das leichtflüchtige Lösungsmittel befindet sich dagegen im Kreislauf und wird immer wieder aus dem Sumpfkolben in den Arbeitskolben zurückgeführt.

Gegen Ende des Arbeitsgangs bildet sich im Sumpfkolben 6 ein Prepolymer-Lösungsmittelgemisch, das hoch an Prepolymer angereichert ist. Durch Schließen des Absperrhahns 5 kann verhindert werden, das neue Lösung in den Sumpfkolben hineinfließt, so daß durch Weiterführung der Destillation dieses Prepolymer weiter eingedickt werden kann. Das Prepolymer wird aus dem Sumpfkolben abgezogen, wenn es die erwünschte Konzentration bzw. Anreicherung erfahren hat.

Naturgemäß reichert sich im Sumpfkolben nicht nur die Prepolymerkomponente aus den Aerosoldosen an, sondern auch die darin enthaltenen Additive und Katalysatoren. Soweit das Produkt erneut zur Bildung von Polyurethanen verwandt wird, stören diese weiteren Stoffe nicht; für andere Zwecke können diese aber zumindest teilweise durch Destillation unter Normaldruck oder im Vakuum oder durch Extraktionsverfahren mit Lösungsmitteln, die das Prepolymer nicht lösen und mit ihm nicht reagieren, entfernt werden.

Es versteht sich, daß sich eine solche Apparatur ohne oder mit nur geringen Modifikationen auch zur Behandlung anderer Emballagen einsetzen läßt.

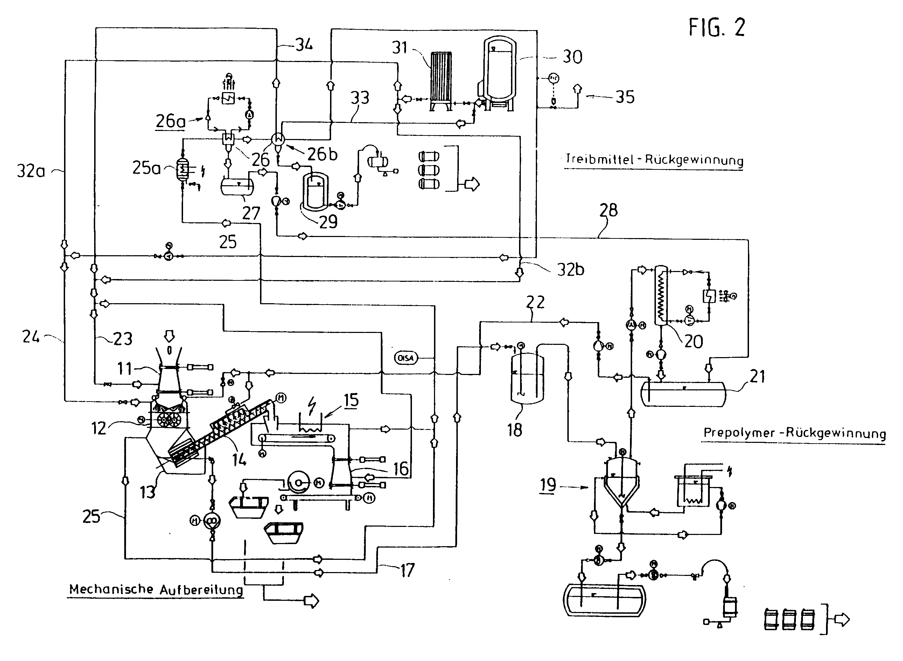

Fig. 2 zeigt schematisch den Verfahrensablauf in einer nach dem erfindungsgemäßen Verfahren betriebenen Anlage für die Prepolymer-Rückgewinnung aus Prepolymer enthaltenden Emballagen, insbesondere Aerosoldosen. Das Verfahren kann aber mit für den Fachmann ohne weiteres ersichtlichen Modifikationen auch auf die Aufbereitung anderer Emballagen angewandt werden, beispielsweise auf die Aufbereitung von Ölfiltern von Kraftfahrzeugen, in welchem Fall sich allerdings die Rückgewinnung der Treibmittel erübrigt.

Die in Fig. 2 gezeigte Anlage besteht aus drei Abschnitten, der mechanischen Aufbereitung, der Prepolymerrückgewinnung und der Treibmittel-Rückgewinnung. In der mechanischen Aufbereitung passieren die angelieferten Emballagen zunächst ein Eingangslager und gelangen zur Aufgabestation, wo die Emballagen von Fremdmaterialien und Kunststoffteilen befreit werden, sowie vorgetrocknet werden. Über eine Zudosierung mit Waage werden sie über eine Eingangsschleuse 11 einer Zerkleinerung 12 zugeführt, in der sie unter Besprühen mit Lösungsmittel geschreddet und in den Arbeitsbehälter 13 transferiert werden. In diesem Arbeitsbehälter werden die geschreddeten Emballagen mit Lösungsmittel gewaschen und von löslichen Bestandteilen getrennt. Die festen Bestandteile werden über eine Förderstrecke 14 unter ständigem Besprühen mit Lösungsmittel abgefördert und dann einer Trocknungsanlage 15 zugeführt und anschließend über eine Schleuse 16 aus dem Verfahren ausgeschleust. Das in der Trocknungsanlage 15 verdampfte Lösungsmittel wird kondensiert und in das Verfahren zurückgeführt. Im Anschluß an die Ausschleusung werden die zerkleinerten Feststoffe nach Material sortiert und der Wiederverwertung zugeführt.

Das im Arbeitsbehälter 13 gesammelte Lösungsmittel mit den darin gelösten Rückständen wird über die Leitung 17 einem Vorlagebehälter 18 zugeführt aus dem die Lösung dann in die Verdampfung gelangt. Hier wird, ggf. unter vermindertem Druck, das Lösungsmittel abdestilliert. Der Destillationsrückstand wird abgezogen, abgestimmt auf den weiteren Verwendungszweck behandelt und konditioniert und in den Wirtschaftskreislauf zurückgeführt. Nicht mehr einsetzbare Rückstände können ggf. der Verbrennung oder als Konzentrat der Deponierung zugeführt werden.

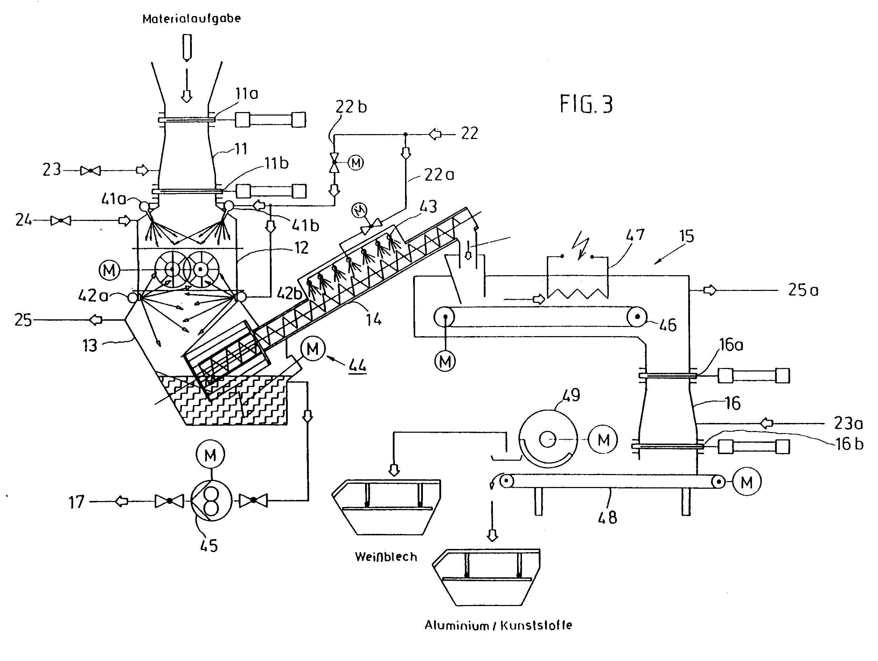

Das aus der Verdampfung 19 abdestillierte Lösungsmittel wird in einer Kondensation 20 kondensiert und über einen Vorratstank 21 und die Leitung 22 in den Kreislauf zurückgeführt. Lösungsmittelverluste werden durch Frischlösungsmittel ausgeglichen. Das kondensierte Lösungsmittel gelangt aus dem Vorratstank 21 über Sprühanlagen (s. Fig. 3) in der Zerkleinerung 12 und der Förderanlage 14 zurück in den Arbeitsbehälter 13.

Die Zerkleinerung im Schredder 12 erfolgt wie die Extraktion und die Destillation unter Schutzgas, im vorliegenden Fall unter Stickstoff, das über die Leitungen 23 und 24 der Schleuse 11 und der Zerkleinerung 12 zugeführt wird. Der bei der Zerkleinerung anfallende Gasanteil wird mit dem Schutzgasstrom über die Leitung 25 und gegebenenfalls eine Aerosolabscheidung und eine Trocknung 25a einer Kondensation 26 zugeführt. Dort werden in einer ersten Stufe 26a zunächst mitgeführte Lösungsmittel abgeschieden und einem Vorratsbehälter 27 zugeführt, der über die Leitung 28 mit dem Lösungsmitteltank 21 der Kondensation 20 in Verbindung steht, und dann in einer zweiten Stufe 26b die Treibmittel kondensiert und gewonnen und in einem Tank 29 gesammelt. Der Treibmittelkondensation können auch die in der Verdampfung 19 der Lösungsmittel anfallenden Treibgasanteile zugeführt werden. Das Schutzgas wird nach der Kondensation des Treibmittels zurückgeführt und gegebenenfalls aus dem Vorratstank 30 über die Leitung 32a nach Durchgang durch einen Verdampfer 31 ergänzt. Die Schleusen 11 und 16 werden jeweils über die Leitungen 32b und 34 mit Schutzgas aus dem Flüssiggastank 30 versorgt.

Zweckmäßigerweise erfolgt die Kondensation von Treibmittel aus dem Schutzgas der Leitung 25 im Kondensator 26b mit Hilfe von aus dem Flüssiggastank 30 über die Leitung 33 herangeführtem frischem und kaltem bis flüssigem Schutzgas, das anschließend über die Leitungen 34 und 23 in die Schleuse 11 eingespeist wird. Schutzgasüberschüsse werden im Anschluß an die Kondensation bei 35 an die Luft abgegeben.

Fig. 3 zeigt eine erfindungsgemäße Anlage zur mechanischen Aufbereitung von rückstandshaltigen Emballagen. Diese besteht aus einer Materialaufgabe in eine Schleusenvorrichtung 11, die über einen Schieber 11a mit aufzubereitenden Emballagen gefüllt wird und über einen zweiten Schieber 11b die eingebrachten Emballagen in die eigentliche Anlage abgibt. Die Schleuse 11 wird über die Leitung 23 mit Schutzgas, insbesondere Stickstoff, beschickt.

Unterhalb der Schleuse 11 befindet sich die Öffnungs- bzw. Schreddervorrichtung aus zwei motorgetriebenen (M) und gegeneinander rotierenden Trommeln, die die eingebrachten Emballagen mit daran angeordneten Messern oder dergleichen zerkleinern. Oberhalb der Schreddervorrichtung befinden sich zwei Sprühdüsen 41a und 41b, durch die Lösungsmittel auf die Oberseite der rotierenden Trommeln abgegeben wird. Gleichermaßen wird Lösungsmittel über schräg unterhalb der Trommeln der Schredderanlage angeordnete Sprühdüsen auf die geschreddeten Emballagen abgegeben.

Die Sprühdüsen 41a, 41b sowie 42a und 42b werden über Zuführungen 22 und 22b mit frischem Lösungsmittel versorgt, das nach dem Versprühen mit dem zerkleinerten Gut in den unter der Zerkleinerungsvorrichtung 12 befindlichen Extraktions- und Arbeitsbehälter 13 gelangt. Im Behälter 13 befindet sich das Extrakt-Lösemittel-Gemisch zusammen mit den festen Bestandteilen der Emballagen. Ein motorgetriebenes Rührwerk 44 sorgt für den innigen Kontakt von festen Emballagenrückständen und Lösungsmittel und eine wirkungsvolle Extraktion. Der Extrakt wird aus dem Behälter 13 mit einer motorgetriebenen Pumpe 45 über die Leitung 17 abgezogen und dem in Fig. 2 gezeigten Vorratsbehälter 18 der Prepolymerrückgewinnung zugeführt.

Zur Abförderung der festen Emballagenrückstände aus dem Behälter 13 dient ein Schneckenförderer 14, der mit seinem unteren Ende in das Extrakt-Lösungsmittel-Gemisch eintaucht. Um die festen Emballagenrückstände exraktfrei zu bekommen, werden sie mit der Schnecke durch eine Waschstrecke mit darin angeordneten und auf die Schnecke gerichteten Sprühdüsen 43 gefördert. Die Sprühdüsen 43 werden über die Lösungsmittelleitungen 22 und 22a mit frischem Lösungsmittel versorgt. Das auf den Schneckenförderer 14 gesprühte Lösungsmittel gelangt in den Behälter 13.

Die mit dem Schneckenförderer 14 geförderten festen Emballagenrückstände gelangen über einen Aufgabetrichter in eine Trockenvorrichtung 15, in der ein Förderband 46 die festen Rückstände unter einer Heizvorrichtung 47 hindurch befördert. Von dort gelangt das Fördergut in eine Austragsschleuse 16. Die Schleuse 16 ist über einen Schieber 16a zur Anlage hin abgedichtet und über einen Schieber 16b zur Aufbereitung der Feststoffe. Über eine Leitung 23a kann Schutzgas in die Schleuse 16 eingeführt werden.

Die Aufbereitung besteht aus einem motorgetriebenen Förderband 48, mit dem das Fördergut unter einem Magnetabscheider 49 hindurch geführt wird. Mit Hilfe des Mangnetabscheiders wird das Fördergut nach seinen magnetischen Eigenschaften sortiert.

Die erfindungsgemäße Anlage gemäß Fig. 3 wird unter Schutzgas betrieben. Das Schutzgas, zweckmäßigerweise Stickstoff, wird über Leitung 24 in die Zerkleinerungsvorrichtung 12 eingeführt und verteilt sich in der gesamten Anlage. Aus der Anlage austretendes, mit Lösungsmittel und gegebenenfalls aus den Emballagen freigesetztem Treibgas beladenes Schutzgas wird über die Leitung 25 aus dem Behälter 13 und/oder über die Leitung 25a aus der Trocknungszone 15 der festen Emballagenrückstände abgezogen. Es ist zweckmäßig, das Schutzgas im Kreis zu führen, da es aus Umweltschutzgründen ohnehin in nachgeschalteten Anlagen von mitgeführtem Treibgas und Lösungsmittel befreit werden muß. Aus diesem Grunde wird es, teilweise in Fig. 2 gezeigt, zweckmäßigerweise nacheinander einer Aerosolabscheidung, einer Feuchtigkeitsabscheidung 25a, einer Lösungsmittelkondensation 26a und einer Treibgaskondensation 26b zugeführt, bevor es in den Kreislauf zurückgeführt wird oder über ein Abluftventil 35 an die Atmosphäre abgegeben wird.

Zweckmäßigerweise sind sämtliche Leitungen mit Ventilen ausgestattet, die, soweit eine Regelung des darin geführten Materialstroms erforderlich ist, motorgetrieben sein können. Dies gilt insbesondere für die Lösungsmittelzuleitungen zu den Sprühdüsen und Waschanlagen, deren Betrieb eingestellt werden kann, sobald die Materialaufgabe bzw. die Abförderung von festen Rückständen endet.

Die im erfindungsgemäßen Verfahren zum Einsatz kommenden Vorrichtungen und Anlagen sind auf dem Markt verfügbar oder können vom Fachmann durch einfache Modifikation oder Anpassung bekannter Vorrichtungen oder Anlagen an den gewünschten Zweck konstruiert werden.

## Patentansprüche

1. Verfahren zur chargenweise oder kontinuierlichen Aufbereitung von rückstandshaltigen Emballagen unter Gewinnung der Wertstoffe, welches die folgenden Schritte einschließt:
Einbringen der Emballagen in einen Arbeitsbehälter (13), wobei die Emballagen geöffnet werden, und Extraktion der Rückstände mit einem geeigneten Lösungsmittel,
Transferieren der rückstandshaltigen Lösung aus dem Arbeitsbehälter (13) in einen Sumpfbehälter (19),
Konzentrieren der rückstandshaltigen Lösung im Sumpfbehälter (19) unter Verdampfen des Lösungsmittels,
Kondensieren des verdampften Lösungsmittels,
Rückführen von Lösungsmittel in den Arbeitbehälter (13) sowie,
nach hinreichender Anreicherung, Gewinnen der Rückstände in konzentrierter Form aus dem Sumpfbehälter (19).

2. Verfahren nach Anspruch 1, dadurch gekennzeichnet, daß die Emballagen unter gleichzeitiger Öffnung in den Arbeitsbehälter (13) eingeschleust werden.

3. Verfahren nach Anspruch 1 oder 2, dadurch gekennzeichnet, daß die Emballagen zur Öffnung geschreddet werden.

4. Verfahren nach Anspruch 3, dadurch gekennzeichnet, daß die Emballagen unter Besprühen mit Lösungsmittel geschreddet werden.

5. Verfahren nach einem der vorstehenden Ansprüche, dadurch gekennzeichnet, daß feste Schredderrückstände über ein Fördergerät (14), vorzugsweise einen Schneckenförderer, aus dem Arbeitsbehälter (13) ausgeschleust werden.

6. Verfahren nach einem der Ansprüche 3 bis 5, dadurch gekennzeichnet, daß ferromagnetische Schredderrückstände magnetisch aus dem Arbeitsbehälter (13) gefördert werden.

7. Verfahren nach einem der Ansprüche 3 bis 6, dadurch gekennzeichnet, daß die Schredderrückstände bei der Abförderung mit Lösungsmittel besprüht werden.

8. Verfahren nach einem der vorstehenden Ansprüche, dadurch gekennzeichnet, daß auf die jeweiligen Rückstände abgestimmte Lösungsmittel verwandt werden.

9. Verfahren nach einem der vorstehenden Ansprüche, dadurch gekennzeichnet, daß als Lösungsmittel Ester, Ketone, aliphatische und/oder aromatische Kohlenwasserstoffe mit einem Siedepunkt bis etwa 200°C verwandt werden.

10. Verfahren nach Anspruch 9, dadurch gekennzeichnet, daß als Lösungsmittel Aceton oder Toluol verwandt werden.

11. Verfahren nach einem der vorstehenden Ansprüche, dadurch gekennzeichnet, daß das Lösungsmittel aus dem Sumpfbehälter (19) unter vermindertem Druck abdestilliert wird.

12. Verfahren nach einem der vorstehenden Ansprüche, dadurch gekennzeichnet, daß in den Emballagen enthaltene Gase, insbesondere Treibmittel, und gegebenenfalls Lösungsmittel abgetrennt und gewonnen werden.

13. Verfahren nach Anspruch 12, dadurch gekennzeichnet, daß die Gase kondensiert werden.

14. Verfahren nach einem der vorstehenden Ansprüche, dadurch gekennzeichnet, daß es unter Schutzgas durchgeführt wird, vorzugsweise unter Stickstoff oder Argon.

15. Verfahren nach Anspruch 14, dadurch gekennzeichnet, daß das Schutzgas im Kreis geführt wird.

16. Verfahren nach einem der vorstehenden Ansprüche, dadurch gekennzeichnet, daß es kontinuierlich durchgeführt wird.

17. Verfahren nach einem der vorstehenden Ansprüche, dadurch gekennzeichnet, daß Aerosoldosen, insbesondere solche für die Ausbringung von Polyurethanschaum, aufbereitet werden.

18. Verfahren nach Anspruch 17, dadurch gekennzeichnet, daß dem Sumpfbehälter eine für die Fließfähigkeit und/oder spätere Verwendbarkeit der rückstandshaltigen Lösung ausreichende Menge Verdünnungsmittel zugesetzt wird.

19. Verfahren nach Anspruch 17 oder 18, dadurch gekennzeichnet, daß das Verdünnungsmittel einen höheren Siedepunkt als das Lösungsmittel hat.

20. Anwendung des Verfahrens nach einem der Ansprüche 1 bis 17 zur Aufbereitung von kohlenwasserstoffhaltigen Emballagen, insbesondere Ölfilter und Ölbehälter.

21. Aufbereitungsanlage zur Durchführung des Verfahrens nach einem der vorstehenden Ansprüche mit einer Eingangs- (11) und einer Ausgangsschleuse (16), einer Vorrichtung zum Öffnen von eingeschleusten Emballagen (12), wenigstens einer Zuleitung für Schutzgas (24) und einer Fördervorrichtung (14) für feste Emballagenrückstände, gekennzeichnet durch einen Extraktions- und Auffangbehälter (13) für die geöffneten Emballagen, wenigstens eine Zuleitung für frisches Lösungsmittel (22), einen Abzug (17) für lösliche Emballagenrückstände enthaltendes Lösungmittel, eine Verdampfungsvorrichtung (19) zum Abdestillieren von Lösungsmittel, eine Kondensationsvorrichtung (20) für abdestilliertes Lösungsmittel, eine Rückführung (22) für kondensiertes Lösungsmittel, sowie wenigstens eine auf die Vorrichtung zum Öffnen der Emballagen (12) gerichtete Sprühvorrichtung (41, 42) zum Versprühen von Lösungsmitteln.

22. Anlage nach Anspruch 21, dadurch gekennzeichnet, daß die Vorrichtung zum Öffnen der Emballagen (12) ein aus zwei gegenläufig rotierenden Schneidtrommeln bestehender Schredder ist.

23. Anlage nach Anspruch 21 oder 22, dadurch gekennzeichnet, daß oberhalb der Vorrichtung zum Öffnen der Emballagen (12) und darauf gerichtet wenigstens eine Sprühdüse (41a, 41b) angeordnet ist.

24. Anlage nach einem der Ansprüche 21 bis 23, dadurch gekennzeichnet, daß unterhalb der Vorrichtung zum Öffnen der Emballagen (12) und darauf gerichtet wenigstens eine Sprühdüse (42a, 42b) angeordnet ist.

25. Anlage nach einem der Ansprüche 21 bis 24, gekennzeichnet durch eine in den Auffangbehälter (13) hineinreichende Förderschnecke (14) zur Abförderung fester Emballagenrückstände.

26. Anlage nach einem der Ansprüche 21 bis 25, dadurch gekennzeichnet, daß oberhalb der Fördervorrichtung für feste Emballagenrückstände und darauf gerichtet Düsen (43) zum Versprühen von Lösungsmittel angeordnet sind.

27. Anlage nach einem der Ansprüche 21 bis 26, gekennzeichnet durch eine im Anschluß an die Fördervorrichtung (14) angeordnete Trockenstrecke (15).

28. Anlage nach einem der Ansprüche 21 bis 27, gekennzeichnet durch separate Schutzgaszuleitungen (23, 23a) im Bereich der Schleuseneinrichtungen (11, 16).

## Claims

1. A method for processing remnant-holding packagings in a batch-wise or continuous manner, while recovering the valuable substances, said method comprising the following steps:
- introducing the packagings into an operational vessel (13) while opening the packagings, and extracting the residues using a suitable solvent,
- transferring the residue-holding solution from the operational vessel (13) into a sump (19).
- concentrating the residue-holding solution in the sump (19) while evaporating the solvent,
- condensing the evaporated solvent,
- recycling solvent into the operational vessel (13), and
- following sufficient enrichment, recovering the residues in concentrated form from the sump (19).

2. The method of claim 1, characterized in that the packagings are sluiced into the operational vessel (13) while simultaneously being opened.

3. The method of claim 1 or 2, characterized in that the packagings are being opened by shredding.

4. The method of claim 3, characterized in that the packagings are shredded while being sprayed with solvent.

5. The method of anyone of the preceding claims, characterized in that solid shredder residues are taken out of the operational vessel (13) by a conveyor (14), preferably a screw conveyor.

6. The method of anyone of claims 3 through 5, characterized in that ferromagnetic shredder residues are magnetically conveyed out of the operational vessel (13).

7. The method of anyone of claims 3 through 6, characterized in that the shredder residues are sprayed with solvent during conveyance.

8. The method of anyone of the preceding claims, characterized in that solvents matching the particular residues are used.

9. The method of anyone of the preceding claims, characterized in that esters, ketones, aliphatic and/or aromatic hydrocarbons with a boiling point up to about 200° C are used as solvents.

10. The method of claim 9, characterized in that acetone or toluene are used as solvents.

11. The method of anyone of the preceding claims, characterized in that the solvent is distilled from the sump (19) under reduced pressure.

12. The method of anyone of the preceding claims, characterized in that gases contained in the packagings, in particular propellants, and possibly solvents are separated and recovered.

13. The method of claim 12, characterized in that the gases are condensed.

14. The method of anyone of the preceding claims, characterized in that it is carried out in an protecting gas atmosphere, preferably under nitrogen or argon.

15. The method of claim 14, characterized in that the protecting gas moves in a closed loop.

16. The method of anyone of the preceding claims, characterized in that it is carried out continuously.

17. The method of anyone of the preceding claims, characterized in that aerosol containers, in particular such serving to deliver polyurethane foam, are processed.

18. The method fo claim 17, characterized in that a sufficient quantity of thinner is added to the sump to achieve fluidity and/or subsequent applicability of the residue-containing solution.

19. The method of claim 17 or 18, characterized in that the boiling point of the thinner is higher than that of the solvent.

20. Use of the method defined in one of claims 1 through 17 to processing hydrocarbon-holding packagings, in particular oil filters and oil containers.

21. Processing equipment with which to carry out the method defined in one of the above claims, comprising an intake sluice (11) and an outlet sluice (16), an apparatus for opening the sluiced-in packagings (12), at least one supply conduit for protecting gas (24), a conveyor (14) for solid packaging residues, characterized by an extracting and receiving vessel (13) for the opened packagings, at least one supply conduit for fresh solvent (22), a drain (17) for a solvent containing soluble packaging residues, an evaporation apparatus (19) for evaporating solvent, a condensation apparatus (20) for distilled off solvent, a recycling conduit (22) for condensed solvent and by at least one spray system (41, 42) pointing at the apparatus (12) opening the packagings, for spraying solvents.

22. The equipment of claim 21, characterized in that the apparatus (12) for opening the packagings is a shredder constituted by two cutter-drums rotating in mutually opposite directions.

23. The equipment of claim 21 or 22, characterized in that at least one spray nozzle (41a, 41b) is mounted above, and points at, the package-opening apparatus (12).

24. The equipment of anyone of claims 21 through 23, characterized in that at least one spray nozzle (42a, 42b) is mounted underneath the package-opening apparatus (12) and is directed at said packagings.

25. The equipment of anyone of claims 21 through 24, characterized by a screw conveyor (14) to remove solid packaging residues which is mounted to enter the receiving vessel (13).

26. The equipment of anyone of claims 21 through 25, characterized in that nozzles (43 spraying solvent are mounted above, and point at, the conveyor for solid packaging residues.

27. The equipment of anyone of claims 21 through 26, characterized by a drier section (15) joining and following the conveyor (14).

28. The equipment of anyone of claims 21 through 27, characterized by separate protecting gas supply conduits (23, 23a) in the vicinity of the sluices (11, 16).

## Revendications

1. Procédé de traitement par charges ou continu d'emballages contenant des résidus avec récupération des substances de valeur, qui comprend les étapes suivantes :
introduction des emballages dans un récipient de travail (13), les emballages étant ouverts, et extraction des résidus avec un solvant approprié,
transfort de la solution contenant les résidus du récipient de travail (13) dans un récipient d'accumulation (19),
concentration de la solution contenant les résidus dans le récipient d'accumulation (19) avec évaporation du solvant,
condensation du solvant évaporé,
renvoi du solvant dans le récipient de travail (13), et
après enrichissement suffisant, récupération des résidus sous forme concentrée à partir du récipient d'accumulation (19).

2. Procédé selon la revendication 1, caractérisé en ce que les emballages sont introduits par un sas dans le récipient de travail (13) en étant ouverts simultanément.

3. Procédé selon la revendication 1 ou 2, caractérisé en ce que les emballages sont déchiquetés pour l'ouverture.

4. Procédé selon la revendication 3, caractérisé en ce que les emballages sont déchiquetés en étant aspergés de solvant.

5. Procédé selon l'une des revendications précédentes, caractérisé en ce que les résidus de déchiquetage solides sont retirés par a sas du récipient de travail (13) par l'intermédiaire d'un appareil transporteur (14), de préférence un transporteur à vis.

6. Procédé selon l'une des revendications 3 à 5, caractérisé en ce que les résidus de déchiquetage ferromagnétiques sont évacués magnétiquement hors du récipient de travail (13).

7. Procédé selon l'une des revendications 3 à 6, caractérisé en ce que les résidus de déchiquetage sont aspergés de solvant lors de l'évacuation.

8. Procédé selon l'une des revendications précédentes, caractérisé en ce que des solvants adaptés aux résidus individuels sont utilisés.

9. Procédé selon l'une des revendications précédentes, caractérisé en ce que l'on utilise comme solvant des esters, des cétones, des hydrocarbures aliphatiques et/ou aromatiques ayant un point d'ébullition pouvant atteindre environ 200°C.

10. Procédé selon la revendication 9, caractérisé en ce que l'on utilise comme solvant l'acétone ou le toluène.

11. Procédé selon l'une des revendications précédentes, caractérisé en ce que le solvant est retiré du récipient d'accumulation (19) par distillation sous pression réduite.

12. Procédé selon l'une des revendications précédentes, caractérisé en ce que les gaz contenus dans les emballages, en particulier les propulseurs, et éventuellement les solvants sont séparés et récupérés.

13. Procédé selon la revendication 12, caractérisé a ce que les gaz sont condensés.

14. Procédé selon l'une des revendications précédentes, caractérisé en ce qu'il est mis en oeuvre sous gaz protecteur, de préférence sous azote ou argon.

15. Procédé selon la revendication 14, caractérisé en ce que le gaz protecteur est amené à circuler dans un circuit.

16. Procédé selon l'une des revendications précédentes, caractérisé en ce qu'il est mis en oeuvre en continu.

17. Procédé selon l'une des revendications précédentes, caractérisé en ce que des boîtes d'aérosols, en particulier des boîtes d'aérosols pour la production de mousse de polyuréthane, sont traitées.

18. Procédé selon la revendication 17, caractérisé en ce qu'une quantité de diluant suffisante pour la fluidité et/ou la possibilité d'utilisation ultérieure de la solution contenant des résidus est ajoutée au récipient d'accumulation.

19. Procédé selon la revendication 17 ou 18, caractérisé en ce que le diluant a un point d'ébullition plus élevé que le solvant.

20. Utilisation du procédé selon l'une des revendications 1 à 17 pour le traitement d'emballages contenant des hydrocarbures, en particulier de filtres à huile et de récipients d'huile.

21. Installation de traitement pour la mise en oeuvre du procédé selon l'une des revendications précédentes comportant un sas d'entrée (11) et un sas de sortie (16), un dispositif pour l'ouverture des emballages introduits par sas (12), au moins une conduite d'amenée pour un gaz protecteur (24) et un dispositif de transport (14) pour les résidus d'emballage solides, caractérisée pu un récipient d'extraction et collecteur (13) pour les emballages ouverts, au moins une conduite d'amenée pour du solvant frais (22), une évacuation (17) pour le solvant contenant des résidus d'emballage solubles, un dispositif d'évaporation (19) pour la distillation du solvant, un dispositif de condensation (20) pour le solvant distillé, un recyclage (22) pour le solvant condensé, et au moins un dispositif d'aspersion (41, 42) dirigé sur le dispositif d'ouverture des emballages (12) pour asperger des solvants.

22. Installation selon la revendication 21, caractérisée en ce que le dispositif pour ouvrir les emballages (12) est un déchiqueteur consistant en deux tambours de coupe tournant en sens inverse.

23. Installation selon la revendication 21 ou 22, caractérisée en ce qu'au moins une buse d'aspersion (41a, 41b) est disposée au-dessus du dispositif pour ouvrir les emballages (12) en étant dirigée vers celui-ci.

24. Installation selon l'une des revendications 21 à 23, caractérisée en ce qu'au moins une buse d'aspersion (42a, 42b) est disposée sous le dispositif pour ouvrir les emballages (12) en étant dirigée vers celui-ci.

25. Installation selon l'une des revendications 21 à 24, caractérisée par une vis transporteuse (14) pénétrant dans le récipient collecteur (13) pour évacuer les résidus d'emballage solides.

26. Installation selon l'une des revendications 21 à 25, caractérisée en ce que des buses (43) pour l'aspersion de solvant sont disposées au-dessus du dispositif transporteur pour les résidus d'emballage solides en étant dirigées vers celui-ci.

27. Installation selon l'une des revendications 21 à 26, caractérisée par une section de séchage (15) disposée à la suite du dispositif transporteur (14).

28. Installation selon l'une des revendications 21 à 27, caractérisée par des conduites d'amenée de gaz protecteur séparées (23, 23a) dans le domaine des dispositifs formant sas (11, 16).
